Europäisches Patentamt

European Patent Office

Office européen des brevets

(19)

(11) Publication number: **0 356 560**
**A1**

# (12) EUROPEAN PATENT APPLICATION

(21) Application number: 88114256.6

(22) Date of filing: 01.09.88

(51) Int. Cl.5: **C01B 33/26 , B01J 29/28 ,**
**B01J 29/08**

(43) Date of publication of application:
07.03.90 Bulletin 90/10

(84) Designated Contracting States:
**AT BE CH DE ES FR GB GR IT LI LU NL SE**

(71) Applicant: **UNION CARBIDE CORPORATION**
**39 Old Ridgebury Road**
**Danbury Connecticut 06817(US)**

(72) Inventor: **Staniulis, Mark Thomas**
**Rancho Drive**
**Peekskill New York 10566(US)**

(74) Representative: **Eggert, Hans-Gunther, Dr.**
**Räderscheidtstrasse 1**
**D-5000 Köln 41(DE)**

(54) Preparation of ultrahydrophobic zeolite.

(57) Ultrahydrophobic zeolites which have been subjected to a secondary synthesis procedure followed by a single steaming step are taught. The preparation procedure taught allows one to prepare an LZ-210 ultrahydrophobic molecular sieve without employing a stabilizing step or ammonium exchange step.

EP 0 356 560 A1

## PREPARATION OF ULTRAHYDROPHOBIC ZEOLITE

### Field of the Invention

The present application relates to the field of ultrahydrophobic zeolites and particularly to the field of Y zeolites which have been subjected to a secondary synthesis procedure, followed by a single steaming step. The preparation procedure of the present invention allows one to prepare a LZ-210 ultrahydrophobic molecular sieves without the necessity of utilizing a stabilizing step and an ammonium exchange step.

### Background of the Invention

Hydrophobic molecular sieves have been employed to a great advantage as catalyst supports for use in various catalyst systems including Fischer-Tropsch type catalysts and hydrocracking catalysts.

Work done by Earls disclosed in detail in commonly assigned U.S. application Serial No. 880,561, filed February 23, 1978 (corresponding to Canadian Patent No. 1,131,195, Issued June 9, 1982), indicates that in order to produce UHP-Y (ultrahydrophobic-Y) it is necessary to ammonium exchange zeolite Y after the first steaming step, otherwise the material loses a substantial fraction of its X-ray crystalliosity, and the framework IR bands become broader and ill defined regardless of the steaming procedure.

It would be an important contribution to the art if an alternate procedure were developed to produce ultrahydrophobic zeolite without the need for subjecting the material to a stabilizing ammonium exchange step. Amongst the known prior art references of which the applicant is aware are the following:

US Patent No. 3,293,172 - Issued December 20, 1966 - Zeolite Z-14US and Method of Preparation Thereof - C.V. McDaniel and P.K. Maher.

U.S. Patent No. 3,447,070 - Issued June 10, 1969 - Stabilized Zeolites - C.V. McDaniel and P.K. Maher.

U.S. Patent Application Serial No. 880561 -Filed February 23, 1978 - Ultrahydrophobic Zeolite -D. Earls.

U.S. Patent No. 4,401,556 Issued August 30, 1983 - Midbarrel Hydrocracking - R.D. Bezman and J.A. Rabo.

U.S. Patent No. 3,506,400 Issued in 1970 - re. Acid Extraction of Steamed y - P.E. Eberly, Jr.

Although none of the foregoing references teach the present invention, various aspects of these references, which are understood to be within the knowledge of one skilled in the are, form the basis for what follows:

### Summary of the Invention

The present invention is directed to a procedure for producing a ultrahydrophobic zeolite and particularly to the field of Y zeolites which have been subjected to a secondary synthesis procedure, followed by a single steaming step. The preparation procedure of the present invention allows one to prepare a LZ-210 ultrahydrophobic molecular sieves without the necessity of utilizing a stabilizing step and an ammonium exchange step.

### Description of the Invention

We have found that by using a Y zeolite that has been subjected to the LZ-210 (disclosed in U.S. Patent Nos. 4,503,023, Issued March 5, 1985, and 4,610,856, Issued September 9, 1986) secondary synthesis procedure a quality ultrahydrophobic zeolite can be made without a ammonium exchange and second steaming as required by the ultrahydrophobic zeolite Y (UHP-Y) process.

A set of experiments were done, aimed at making HP-Y (hydrophobic Y) then acid extracting it to make Hyper Y from Y-72, Y-82 and LZ-210 starting materials. Using the procedures outlined by Earls in his UHP-Y work (U.S. Application Serial No. 880,561, Filed February 23, 1978). The work with Y-72 and Y-82 was done to supply baseline information so a comparison could be made with LZ-210. The Y-72 and Y-82 work

2

supported the Earls UHP-Y work by showing that in order to make UHP-Y it is necessary to $NH_4^+$ exchange zeolite Y after the first steaming.

## EXAMPLES

While the invention has been generally described above, the details of the present invention will be better understood by recourse by the following examples which serve to illustrate the present invention.

## EXAMPLE I

Starting with commercial Y-72, Y-82 was made by ammonium exchanging the Y-72. This was done to eliminate variations in the Y-62 or the steaming conditions in making the Y-72. These represent the controls of the following Examples.

## EXAMPLE II

LZ-210 having a $SiO_2/Al_2O_3$ ratio 9.1 was synthesized (using the preparation disclosed in U.S Patent No. 4,503,023, Issued March 5, 1985) in a semi-works facility using a aluminum sulfate crystal wash treatment to help wash out the fluoride used in the secondary synthesis step, as disclosed by R.S. Hinchey, U.S. Patent No. 4,597,956, Issued July 1, 198 .

## EXAMPLE III

Samples of the Y-72, Y-82 and LZ-210, prepared in Examples I-II were then stirred in 6 N HCl for 3 hours at room temperature and then characterized. While the acid extraction destroyed the crystallinity of all three zeolites, almost all the alumina was extracted from the LZ-210. The Y-72 and Y-82 retained a 4.5 wt % alumina. (See Table 1).

TABLE 1

| Properties of 6N HCL Extracted Zeolites | | | | |
|---|---|---|---|---|
| | Wt % | Wt % | Wt % | Wt % |
| Zeolite | $Na_2O$ | $(NH_4)_2O$ | $SiO_2$ | $Al_2O_3$ |
| Y-72 | 0.17 | <0.05 | 95.9 | 4.3 |
| Y-82 | 0.11 | 0.17 | 95.2 | 4.5 |
| LZ-210 | 0.03 | 0.05 | 100.0 | 0.18 |

## EXAMPLE IV

Two different steaming conditions were investigated; 1) a three hour dry air calcination of the zeolites at 400° C then cooling to room temperature in a desicator, followed by steaming at 750° C in a preheated tube furnace with 100% steam for one hour. 2) Steaming the zeolite at 750° C for 16 hours in 100% steam. The tube furnace was preheated to 750° C prior to inserting the sample into the furnace.

Following the steaming by either procedure the products were acid extracted with either concentrated

3

HCL twice at room temperature for one hour then 16 hours or twice with 6 N HCL solutions at reflux for four hours and three hours respectively.

As a class of products, the steamed Y-72 samples lost at least a substantial fraction of their X-ray crystallinity. The framework infrared spectra are broad and ill defined regardless of the steaming and acid extraction procedures.

The steamed Y-82 samples maintained their X-ray crystallinity and the framework infrared spectra were sharpened as would be expected for a typical UHP-Y. In all cases the acid extracted product shows a higher $SiO_2Al_2O_3$ ratio for the steamed Y-82 product than the steamed Y-72 (Table 2).

The LZ-210 samples maintained their x-ray crystallinity and the framework infrared spectra were sharpened as might be expected for a typical UHP-Y made from a Y-82 by known procedures. The difference lies in the fact that the LZ-210, which was only steamed once, displayed properties similar to the Y-82, which was steamed and ammonium exchanged and steamed again. Another significant difference between the LZ-210 and Y-82 was the $Na_2O$ level. The LZ-210 used contained 1.2 wt % $Na_2O$ which is significantly higher than the 0.25 wt % of Y-82. Contrary to the teachings of the art which has taught that the $Na_2O$ level must be below 1.0 wt %. All prior work of which the applicant is aware has taught that an upper limit of 6 on $SiO_2Al_2O_3$ ratio was necessary to produce a UHP-Y material. Thus the use of an LZ-210 with a $SiO_2/Al_2O_3$ ratio of 8.0 and above and high $Na_2O$ level is completely contraindicated by known prior art.

TABLE 2

| Characteristics of Steamed Samples | | | | | | | |
|---|---|---|---|---|---|---|---|
| | $^aO$ | % Crystal Retention Area Ht. | | Chem. $SiO/Al_2O_3$ | $H_2O$ Cap 4.6 tore | Stm. Hrs. | Acid Concen. |
| Y-72 | | | | | | | |
| Sample 1 | 24.21 | 65.2 | 57.2 | 27 | 9.0 | 1 | conc. HCl |
| 2 | 24.13 | 33.2 | 19.8 | 45 | 6.6 | 1 | 6N HCl |
| 3 | 24.26 | 9.1 | 5.5 | 9 | 3.8 | 16 | conc. HCl |
| 4 | 24.27 | 7.7 | 5.5 | 12 | 5.6 | 16 | 6N HCl |
| Y-82 | | | | | | | |
| Sample 1 | 24.26 | 94.9 | 86.6 | 33 | 5.8 | 1 | conc. HCl |
| 2 | 24.26 | 93.7 | 85.1 | 79 | 7.6 | 1 | 6N HCl |
| 3 | 24.27 | 91.7 | 80.9 | 21 | 4.1 | 16 | conc. HCl |
| 4 | 24.27 | 84.7 | 72.6 | 113 | 2.5 | 16 | 6N HCl |
| LZ-210 (9.1) | | | | | | | |
| Sample 1 | 24.28 | 92.7 | 79.7 | 50 | 4.1 | 1 | conc. HCl |
| 2 | 24.24 | 105.2 | 99.4 | 68 | 1.7 | 1 | 6N HCl |
| 3 | 24.26 | 76.3 | 66.1 | 18 | <0.1 | 16 | conc. HCl |
| 4 | 24.26 | 69.9 | 59.9 | 23 | 1.4 | 16 | 6N HCl |

EXAMPLE V

LZ-210 samples with $SiO_2/Al_2O_3$ ratio of 6.2 and 9.0 were steamed using the Y-72 procedure (600° C, 100% steam for 1 hr.), then ammonium exchanged making them like a Y-82. The samples were steamed at 750° C 100% steam for 1 hr. to make a UHP/Y type product. The x-ray diffraction pattern showed very highly crystalline zeolites with a IR framework typical of a ultrahydrophobic Y zeolite. The surface areas are about 100 and 150 $m^2/g$ greater than a typical UHP/Y for LZ-210 6.2 and 9.0 respectively. So even when LZ-210 is steamed to make a UHP/Y it yields a more stable crystalline zeolite.

It has been found that, preferably the ultrahydrophobic LZ-210 zeolites of the present invention will have

4

a $SiO_2/Al_2O_3$ ratio above 8, more preferably they will have a ratio of from about 9-15 and still more preferably they will have a ratio of from about 9-11.

Steamed ultrahydrophobic LZ-210 of the present invention is a new zeolitic material with a more variable range of mild acid strength and hydrophobicity than conventional UHP-Y.

While the invention has been described with respect to the various embodiments, it is to be understood that the invention is not limited thereto and can be practiced within the scope of the various claims.

## Claims

1. A process for the preparation of ultrahydrophobic zeolites wherein a Y zeolite is subjected to a secondary synthesis procedure followed by a single steaming step.

2. A process according to claim 1 wherein the secondary synthesis procedure is an LZ-210 secondary synthesis.

3. The process of claim 2 wherein the LZ-210 produced has a $SiO_2/Al_2O_3$ ratio equal to 8 or above.

4. The process of claim 2 wherein the LZ-210 produced has a $SiO_2/Al_2O_3$ ratio of from about 9.0 to 15.0.

5. The process of claim 2 wherein the LZ-210 produced has a $SiO_2/Al_2O_3$ ratio of from about 9.0 to 11.0.

6. A process for the preparation of an ultrahydrophobic zeolite according to claim 1 wherein the UHP zeolite produced has a $SiO_2/Al_2O_3$ ratio above about 8 and has an x-ray diffraction pattern similar to that of a Y zeolite.

7. An ultrahydrophobic zeolite comprising a Y zeolite which has been subjected to a secondary synthesis procedure followed by a single steaming step.

8. An ultrahydrophobic zeolite according to claim 7 wherein the secondary synthesis procedure is an LZ-210 synthesis procedure.

9. An ultrahydrophobic zeolite according to claim 7, which has $SiO_2/Al_2O_3$ ratio above 8.

10. An ultrahydrophobic zeolite according to claim 7 which has a $SiO_2/Al_2O_3$ ratio of from about 9 to 15.

11. An ultrahydrophobic zeolite according to claim 7 which has a $SiO_2/Al_2O_3$ ratio of from about 9 to 11.

12. An ultrahydrophobic zeolite according to claim 7 which has a $SiO_2/Al_2O_3$ ratio above about 8 and has an X-ray diffraction pattern similar to that of a Y zeolite.

13. A catalyst comprising as a support an ultrahydrophobic zeolite produced in accordance with the process of claim 1.

14. A catalyst comprising as a support an ultrahydrophobic zeolite produced in accordance with claim 1, said ultrahydrophobic zeolite having a $SiO_2/Al_2O_3$ ratio above 8.

15. A catalyst comprising as a support an ultrahydrophobic zeolite produced in accordance with claim 1, said ultrahydrophobic zeolite having a $SiO_2/Al_2O_3$ ratio of from about 9 to 15.

16. A catalyst comprising as a support an ultrahydrophobic zeolite produced in accordance with claim 1, said ultrahydrophobic zeolite having a $SiO_2/Al_2O_3$ ratio of from about 9 to 11.

17. A process according to claim 3 wherein the product is subsequently cation exchanged.

18. A process according to claim 17 wherein the cation used is ammonium.

19. A process according to claim 3 wherein the product is subsequently acid extracted.

20. A process according to claim 19 wherein the product is acid extracted with HCL.

21. A catalyst comprising as a support an ultrahydrophobic zeolite produced in accordance with claim 17.

22. A catalyst comprising as a support an ultrahydrophobic zeolite produced in accordance with claim 19.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 124 120 (UNION CARBIDE) <br> * Especially pages 29,42-43; claims 33-40,51,54,61-62 * <br> --- | | C 01 B 33/28 <br> B 01 J 29/28 // <br> B 01 J 29/08 |
| A | EP-A-0 139 291 (UNION CARBIDE) <br> * Especially pages 11,28,38 * <br> --- | | |
| A | WO-A-8 605 483 (UNION CARBIDE) <br> --- | | |
| A | EP-A-0 220 616 (UNION OIL) <br> * Especially page 11, line 20 - page 12, line 12 * <br> ----- | | |

TECHNICAL FIELDS
SEARCHED (Int. Cl.4)

B 01 J 29/00

The present search report has been drawn up for all claims

| Place of search | Date of completion of the search | Examiner |
|---|---|---|
| THE HAGUE | 11-04-1989 | DEVISME F.R. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P0401)